# FASCICULE DE BREVET EUROPEEN

(11) **EP 4 377 108 B1**
(45) Date de publication et mention de la délivrance du brevet: **05.08.2026**
(21) Numéro de dépôt: 22744482.5
(22) Date de dépôt: 21.07.2022
(51) Int. Cl.: B60H 1/32

(54) **SYSTÈME DE CONDITIONNEMENT THERMIQUE POUR VÉHICULE AUTOMOBILE**
WÄRMEKONDITIONIERUNGSSYSTEM FÜR EIN KRAFTFAHRZEUG
THERMAL CONDITIONING SYSTEM FOR A MOTOR VEHICLE

(30) Priorité: 26.07.2021 FR 2108071
(43) Date de publication de la demande: 05.06.2024
(73) Titulaire: Valeo Electrification, 95892 Cergy Pontoise (FR)
(72) Inventeur: AKIKI, Roland, 78320 Le Mesnil-Saint-Denis (FR); GARDIE, Patricia, 78320 Le Mesnil-Saint-Denis (FR); LIU, Jinming, 78320 Le Mesnil-Saint-Denis (FR); EL CHAMMAS, Rody, 78320 Le Mesnil-Saint-Denis (FR); BEAUVIS, Regis, 78320 Le Mesnil-Saint-Denis (FR); PORTO, Muriel, 78320 Le Mesnil-Saint-Denis (FR)
(74) Mandataire: Valeo Powertrain Systems
(86) Numéro de dépôt international: PCT/EP2022/070451
(87) Numéro de publication internationale: WO 2023/006561

(56) Documents cités:
- WO-A1-2020/203151
- DE-A1- 102018 209 769
- FR-A1- 3 070 316
- US-A1- 2019 366 800
- US-A1- 2020 361 280

## Description

### Domaine technique

La présente invention se rapporte au domaine des systèmes de conditionnement thermique. De tels systèmes peuvent notamment équiper des véhicules automobiles. Ces systèmes permettent par exemple une régulation thermique de différents organes du véhicule, tel l'habitacle ou une batterie de stockage d'énergie électrique, lorsque le véhicule est à propulsion électrique ou hybride. Les échanges de chaleur sont gérés principalement par la compression et la détente d'un fluide réfrigérant circulant dans un circuit dans lequel sont disposés plusieurs échangeurs de chaleur.

### Technique antérieure

Les systèmes de conditionnement thermique font couramment appel à un circuit de fluide réfrigérant comportant une boucle principale de circulation du fluide réfrigérant et au moins une branche de dérivation disposée en parallèle d'une partie de la boucle principale. Diverses vannes permettent de réaliser différentes combinaisons de circulation du fluide réfrigérant dans les différents éléments du circuit. Plusieurs échangeurs de chaleur et dispositifs de détente du fluide réfrigérant permettent de contrôler les échanges thermiques au sein du système de conditionnement thermique. Il est ainsi possible de réaliser au choix différents modes de fonctionnement, comme par exemple un mode de chauffage de l'habitacle, un mode de refroidissement de l'habitacle, un mode de refroidissement d'un élément de la chaine de traction du véhicule comme une batterie de stockage d'énergie électrique.

Un procédé de contrôle d'un système de conditionnement thermique d'un type connu est divulgué par le document DE 10 2018 209769 A1.

Un mode de fonctionnement particulier du système de conditionnement thermique peut être par exemple un mode dit de refroidissement de la chaine de traction. Dans ce mode, un élément de la chaine de traction du véhicule est refroidi. Cet élément de la chaine de traction peut en particulier être une batterie de stockage d'énergie électrique. Ce mode de fonctionnement permet ainsi de refroidir la batterie, par exemple lors de sa recharge. Pour cela, un évaporateur couplé thermiquement à la batterie permet d'en assurer le refroidissement. La chaleur prélevée à la batterie est transférée au fluide réfrigérant circulant dans l'évaporateur. Cette chaleur est ensuite dissipée dans un autre échangeur de chaleur, par exemple échangeant de la chaleur avec un flux d'air extérieur au véhicule. Un autre mode de fonctionnement couramment utilisé est le mode dit de climatisation de l'habitacle. Ce mode de fonctionnement permet de refroidir le flux d'air alimentant l'habitacle, afin d'assurer le confort des passagers par ambiance chaude. Pour cela, un autre échangeur de chaleur, fonctionnant en évaporateur, est traversé par le flux d'air alimentant l'habitacle, et absorbe de la chaleur de ce flux d'air. Lorsque le système de conditionnement thermique fonctionne en mode refroidissement de la chaine de traction, la circulation de fluide réfrigérant est interrompue dans l'évaporateur couplé au flux d'air de l'habitacle. Pour cela, une vanne d'arrêt, éventuellement complétée par un clapet anti-retour, permet d'isoler cette portion de circuit par rapport à la portion active du circuit de fluide réfrigérant. Lorsque la température de l'habitacle est suffisamment froide, le fluide réfrigérant présent dans l'échangeur de l'habitacle peut se condenser. L'étanchéité des moyens d'arrêt n'étant généralement pas totale, une accumulation progressive de fluide réfrigérant liquide peut se produire dans l'échangeur de chaleur susceptible d'être traversé par le flux d'air intérieur à l'habitacle.

Une telle accumulation de réfrigérant liquide peut perturber le fonctionnement du système de conditionnement thermique, car la quantité de réfrigérant disponible pour participer alors aux échanges de chaleur peut devenir insuffisante. L'efficacité énergétique du système de conditionnement thermique est alors dégradée. L'invention propose un procédé de contrôle d'un système de conditionnement thermique visant à éviter une accumulation excessive de fluide réfrigérant liquide dans l'échangeur de chaleur qui n'est pas utilisé, lorsque de telles conditions de fonctionnement sont rencontrées.

### Résumé

A cette fin, la présente invention propose un procédé de contrôle d'un système de conditionnement thermique, le système de conditionnement thermique comportant un circuit de fluide réfrigérant configuré pour faire circuler un fluide réfrigérant, suivant l'ensemble des caractéristiques de la revendication 1.

En ajustant la valeur d'au moins un paramètre opératoire du système de conditionnement thermique, celui-ci peut fonctionner avec une pression du fluide réfrigérant en sortie du premier évaporateur qui est inférieure à un seuil de pression prédéterminé. En choisissant une valeur suffisamment faible pour ce seuil, une migration du fluide réfrigérant vers le deuxième échangeur de chaleur est évitée. En effet, il n'y a dans ce cas pas de différence de pression susceptible d'induire un déplacement du fluide réfrigérant gazeux depuis la sortie du premier évaporateur vers le deuxième échangeur de chaleur. De plus, comme la pression en sortie du premier évaporateur est quasiment égale à la pression en sortie du deuxième échangeur de chaleur, le fait de contrôler la valeur de la pression en sortie du premier évaporateur à un niveau inférieur à la pression de vapeur saturante du fluide réfrigérant correspondant à la température du flux d'air extérieur permet d'éviter un phénomène de condensation du fluide réfrigérant dans le deuxième échangeur. Une accumulation intempestive de fluide réfrigérant liquide dans le deuxième échangeur de chaleur est évitée. Plusieurs paramètres opératoires peuvent être modifiés pour ajuster la valeur de la pression du fluide réfrigérant à une valeur souhaitée. Ces paramètres peuvent être modifiés indépendamment ou de manière complémentaire.

Les caractéristiques listées dans les paragraphes suivant peuvent être mises en œuvre indépendamment les unes des autres ou selon toutes les combinaisons techniquement possibles :

Selon un mode de réalisation, l'élément de la chaine de traction électrique est une batterie de stockage d'énergie électrique. La batterie peut notamment fournir l'énergie électrique à un moteur électrique de traction du véhicule.

En variante, l'élément de la chaine de traction électrique peut également être un module électronique de pilotage d'un moteur électrique de traction du véhicule.

Selon un mode de réalisation, le premier fluide caloporteur est un liquide caloporteur configuré pour circuler dans un troisième échangeur de chaleur, le troisième échangeur de chaleur étant configuré pour échanger de la chaleur avec le flux d'air intérieur à l'habitacle du véhicule automobile.

Selon un autre mode de réalisation, le premier fluide caloporteur est un flux d'air intérieur à l'habitacle du véhicule automobile.

Selon l'invention, le procédé comporte les étapes :
- a) déterminer une température du flux d'air intérieur,
- b) déterminer une pression de vapeur saturante du fluide réfrigérant correspondant à la température du flux d'air intérieur, la pression (P1) du fluide réfrigérant en sortie du premier évaporateur (5) est contrôlée de sorte à être inférieure à la valeur déterminée de la pression de vapeur saturante (Ps).

Cette valeur du seuil de pression permet d'éviter un déplacement de la charge de fluide réfrigérant vers le deuxième échangeur de chaleur. Le système de conditionnement thermique peut fonctionner de manière stable, sans dérive progressive de ses performances thermiques.

Selon un mode de réalisation, le procédé comporte les étapes :
- d1) réduire la section de passage du premier dispositif de détente jusqu'à une valeur minimale,
- e1) augmenter la section de passage du deuxième dispositif de détente pour qu'un débit de fluide réfrigérant traverse le deuxième échangeur de chaleur.

En faisant passer un débit de fluide réfrigérant dans le deuxième échangeur de chaleur, des conditions de fonctionnement permettant une évaporation du liquide réfrigérant éventuellement accumulé dans le deuxième échangeur de chaleur sont obtenues.

Selon un exemple de mise en œuvre du procédé, la valeur minimale de la section de passage du premier dispositif de détente est nulle.

Selon un autre exemple de mise en œuvre du procédé, la valeur minimale de la section de passage du premier dispositif de détente est comprise entre 20% et 50% d'une section maximale de passage du premier dispositif de détente.

Selon un autre aspect du procédé, dans lequel le dispositif de compression est du type rotatif, le procédé comporte l'étape :
- d2) augmenter un régime de rotation du dispositif de compression jusqu'à une valeur supérieure à un seuil de régime prédéterminé.

Une augmentation du régime de rotation du dispositif de compression, permettant d'augmenter le débit de fluide réfrigérant à haute pression refoulé, est une autre manière d'ajuster la pression du fluide réfrigérant dans le premier évaporateur à une valeur souhaitée.

Le dispositif de compression possède un régime de rotation maximal, et le seuil de régime prédéterminé est supérieur à 80% du régime de rotation maximal.

Selon un exemple de mise en œuvre, le procédé comporte les étapes :
- d3) diminuer la section de passage du premier dispositif de détente,
- e3) maintenir la section de passage du deuxième dispositif de détente à une valeur nulle.

Selon une autre variante de mise en œuvre du procédé, dans lequel le système de conditionnement thermique comprend un quatrième échangeur de chaleur configuré pour échanger de la chaleur avec un flux d'air extérieur, le système de conditionnement thermique est configuré pour faire circuler le premier fluide caloporteur dans le quatrième échangeur de chaleur.

Le quatrième échangeur de chaleur permet de refroidir le fluide caloporteur circulant dans le premier échangeur de chaleur, en dissipant de la chaleur dans le flux d'air extérieur.

Selon un mode de mise en œuvre du procédé, l'étape ii) est répétée en continu lorsque le système de conditionnement thermique est en fonctionnement.

Cet aspect du procédé de contrôle est appliqué particulièrement lorsque le circuit de fluide réfrigérant ne comporte aucun dispositif mécanique restreignant la circulation de fluide réfrigérant du deuxième point de raccordement vers la sortie du deuxième échangeur de chaleur.

Selon un autre mode de mise en œuvre du procédé, le circuit de fluide réfrigérant comporte un clapet antiretour disposé sur la première branche de dérivation en aval du deuxième échangeur de chaleur et en amont du deuxième point de raccordement, le clapet antiretour étant configuré pour bloquer une circulation du fluide réfrigérant du deuxième point de raccordement vers une sortie du deuxième échangeur de chaleur.

En variante, le circuit de fluide réfrigérant comporte une vanne d'arrêt disposé sur la première branche de dérivation en aval du deuxième échangeur de chaleur et en amont du deuxième point de raccordement.

Un clapet antiretour, ou une vanne d'arrêt, permettent de bloquer, ou au moins de limiter, un cheminement de fluide réfrigérant depuis la sortie du premier évaporateur vers la sortie du deuxième échangeur thermique.

Le procédé de contrôle peut comporter avant l'étape ii) une étape :
- i1) détecter une accumulation de fluide réfrigérant dans le deuxième échangeur de chaleur,
et l'étape ii) est mise en œuvre uniquement si une accumulation de fluide réfrigérant dans le deuxième échangeur de chaleur est détectée à l'étape i1).

Dans ce mode de réalisation, le clapet anti-retour, ou la vanne d'arrêt si elle utilisée à la place du clapet anti-retour, permet de limiter la circulation du fluide réfrigérant vers le deuxième échangeur de chaleur. L'accumulation du fluide réfrigérant liquide est ainsi ralentie. Il est ainsi possible d'appliquer l'étape de contrôle de la pression du fluide réfrigérant en sortie du premier évaporateur uniquement lorsqu'elle est nécessaire. Un fonctionnement temporaire dans des conditions provoquant une condensation du fluide réfrigérant dans le deuxième échangeur est acceptable, car l'accumulation de fluide réfrigérant est alors lente.

Selon un aspect de l'invention, l'étape ii) est suivie par une étape de fonctionnement selon un mode dit de refroidissement de la chaine de traction dans lequel le premier fluide caloporteur reçoit de la chaleur du fluide réfrigérant et le deuxième fluide caloporteur cède de la chaleur au fluide réfrigérant, et dans lequel un débit de fluide réfrigérant à travers le deuxième échangeur de chaleur est nul.

Un fonctionnement selon le mode de refroidissement de la chaine de traction est réactivé lorsque le liquide réfrigérant accumulé a été vaporisé grâce au contrôle de la pression dans le premier évaporateur. Le refroidissement de l'élément de la chaine de traction du véhicule est ainsi maximisé.

Selon un exemple de mise en œuvre du procédé,
l'étape i1) de détection d'une accumulation de fluide réfrigérant dans le deuxième échangeur de chaleur comprend les sous-étapes :
- déterminer une température du deuxième fluide caloporteur en sortie du premier évaporateur,
- si la température déterminée est supérieure à un premier seuil prédéterminé, détecter une accumulation de fluide réfrigérant dans le deuxième échangeur de chaleur.

En variante ou de manière complémentaire,
l'étape i1) de détection d'une accumulation de fluide réfrigérant dans le deuxième échangeur de chaleur comprend les sous-étapes :
- déterminer une vitesse de variation de la température du deuxième fluide caloporteur en sortie du premier évaporateur,
- si la vitesse de variation déterminée est supérieure à un deuxième seuil prédéterminé, détecter une accumulation de fluide réfrigérant dans le deuxième échangeur de chaleur.

Une augmentation trop rapide de la température du deuxième fluide caloporteur est un indicateur d'un manque de fluide réfrigérant circulant dans le circuit et participant aux échanges thermiques, autrement dit indique une accumulation excessive de réfrigérant liquide. Une surveillance de la température du premier fluide caloporteur permet donc de détecter l'accumulation de fluide réfrigérant dans le deuxième échangeur de chaleur.

Selon un exemple de mise en œuvre, le seuil prédéterminé dépend d'une puissance électrique de l'élément de la chaine de transmission.

Selon un mode de réalisation, dans lequel le système de conditionnement thermique comprend un dispositif d'accumulation de fluide réfrigérant disposé sur la boucle principale en aval du premier échangeur et en amont du premier point de raccordement,
l'étape de détection d'une accumulation de fluide réfrigérant dans le deuxième échangeur de chaleur comprend les sous-étapes :
- déterminer une valeur de surchauffe du fluide réfrigérant en sortie du premier évaporateur,
- si la surchauffe déterminée est supérieur à un troisième seuil prédéterminé, détecter une accumulation de fluide réfrigérant dans le deuxième échangeur de chaleur.

Lorsque l'architecture du dispositif de conditionnement permet une surchauffe du fluide réfrigérant en entrée du dispositif de compression, une surveillance de la valeur de la surchauffe permet de diagnostiquer un manque de réfrigérant circulant dans le circuit de fluide réfrigérant. Une surchauffe excessive indique ainsi un manque de fluide réfrigérant circulant dans le circuit.

Selon un autre mode de réalisation, dans lequel le système de conditionnement thermique comprend un dispositif d'accumulation de fluide réfrigérant disposé sur la boucle principale en aval du deuxième point de raccordement et en amont du dispositif de compression,
l'étape de détection d'une accumulation de fluide réfrigérant dans le deuxième échangeur de chaleur comprend les sous-étapes :
- déterminer une valeur de sous-refroidissement du fluide réfrigérant en entrée du premier dispositif de détente,
- si le sous-refroidissement déterminé est inférieur à un quatrième seuil prédéterminé, détecter une accumulation de fluide réfrigérant dans le deuxième échangeur de chaleur.

Lorsque l'architecture du dispositif de conditionnement permet un sous-refroidissement du fluide réfrigérant en sortie du premier échangeur de chaleur, autrement dit en entrée du premier dispositif de détente, une valeur trop faible du sous-refroidissement indique un manque de fluide réfrigérant dans le circuit.

Selon un mode de mise en œuvre du procédé, l'étape ii) de contrôle de la pression du fluide réfrigérant en sortie du premier évaporateur est appliquée pendant une durée prédéterminée.

Selon un exemple de mise en œuvre, la durée prédéterminée dépend de la température du flux d'air intérieur.

Selon un autre exemple de mise en œuvre, le procédé comporte les étapes :
- a) déterminer une température du flux d'air intérieur,
- b) déterminer une pression de vapeur saturante du fluide réfrigérant pour la valeur déterminée de la température du flux d'air intérieur,
- c) déterminer la différence entre la pression de vapeur saturante du fluide réfrigérant pour la valeur déterminée de la température du flux d'air intérieur et le seuil prédéterminé,
et la durée prédéterminée dépend de la différence déterminée à l'étape c).

Selon un mode de réalisation, le système de conditionnement thermique comprend une deuxième branche de dérivation reliant un troisième point de raccordement disposé sur la boucle principale en aval du premier point de raccordement et en amont du premier dispositif de détente à un quatrième point de raccordement disposé sur la boucle principale en aval du premier évaporateur et en amont du deuxième point de raccordement, la deuxième branche de dérivation comportant un troisième dispositif de détente et un troisième échangeur de chaleur configuré pour échanger de la chaleur avec un flux d'air extérieur à l' habitacle du véhicule automobile.

Le troisième échangeur de chaleur permet d'assurer un fonctionnement du système de conditionnement thermique en mode pompe à chaleur. Autrement dit, dans ce mode la chaleur permettant la vaporisation du fluide réfrigérant dans le troisième échangeur de chaleur est prélevée sur le flux d'air extérieur, et est transférée au flux d'air intérieur à l'habitacle.

Selon un exemple de mise en œuvre, le système de conditionnement thermique comprend un échangeur de chaleur interne disposé conjointement sur la boucle principale en aval du premier échangeur de chaleur et en amont du premier point de raccordement, et sur la boucle principale en aval du deuxième point de raccordement et en amont du dispositif de compression.

L'échangeur de chaleur interne permet d'augmenter la variation d'enthalpie du fluide réfrigérant au cours du cycle thermodynamique et améliore l'efficacité du système.

Selon un mode de réalisation, le procédé comporte les étapes :
- Chauffer le flux d'air intérieur pour que la pression du fluide réfrigérant en sortie du premier évaporateur soit inférieure à un seuil prédéterminé.

Selon un exemple de mise en œuvre du procédé, le système de conditionnement thermique comprend un dispositif de chauffage électrique, et le chauffage du flux d'air intérieur est réalisé par l'activation d'un dispositif de chauffage électrique.

Le procédé comprend ainsi l'étape :
- Activer le dispositif de chauffage électrique pendant une durée prédéterminée.

Selon une variante de mise en œuvre du procédé, le procédé comprend les étapes :
- faire fonctionner le système de conditionnement thermique selon un mode dit de récupération d'énergie, dans lequel le premier fluide caloporteur reçoit de la chaleur du fluide réfrigérant et le deuxième fluide caloporteur cède de la chaleur au fluide réfrigérant, pour chauffer le flux d'air intérieur,
- contrôler le débit du flux d'air intérieur à une valeur inférieure à un seuil prédéterminé.

Ces étapes permettent de limiter l'énergie dissipée par le dispositif de chauffage électrique, et donc d'améliorer l'efficacité énergétique du système.

Selon un mode de réalisation, le premier fluide caloporteur chauffe le flux d'air intérieur par l'intermédiaire du troisième échangeur de chaleur.

Selon un mode de réalisation, le système de conditionnement thermique comprend un volet mobile configuré pour régler un taux de recirculation du flux d'air intérieur,
et le procédé comprend l'étape :
- contrôler la position du volet mobile pour que le taux de recirculation du flux d'air intérieur soit supérieur à un seuil prédéterminé.

Selon une variante de mise en œuvre, le seuil prédéterminé du taux de recirculation du flux d'air intérieur est constant.

Suivant une autre variante de mise en œuvre, le procédé comporte l'étape :
- détecter une présence d'au moins un occupant dans l'habitacle du véhicule,
- si la présence d'au moins un occupant est détectée, attribuer une première valeur au seuil prédéterminé du taux de recirculation du flux d'air intérieur,
- sinon attribuer une deuxième valeur au seuil prédéterminé du taux de recirculation du flux d'air intérieur, la deuxième valeur étant supérieure à la première valeur.

La première valeur du seuil prédéterminé du taux de recirculation du flux d'air intérieur est comprise entre 10% et 60%.

La deuxième valeur du seuil prédéterminé du taux de recirculation du flux d'air intérieur est comprise entre 60% et 100%.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique d'un système de conditionnement thermique selon un premier mode de réalisation de l'invention,
[Fig. 2] est une vue schématique d'un système de conditionnement thermique selon un deuxième mode de réalisation de l'invention,
[Fig. 3] est une vue schématique d'un système de conditionnement thermique selon un troisième mode de réalisation de l'invention,
[Fig. 4] est une vue schématique d'une variante du système de conditionnement thermique de la figure 3,
[Fig. 5] est un diagramme thermodynamique illustrant le fonctionnement du système de conditionnement thermique,
[Fig. 6] est un schéma bloc du procédé de contrôle selon l'invention,
[Fig. 7] est une vue schématique du système de conditionnement thermique de la figure 1, fonctionnant suivant un mode de fonctionnement, dit mode de refroidissement de la chaine de traction,
[Fig. 8] est une vue schématique du système de conditionnement thermique de la figure 1, fonctionnant suivant un mode de fonctionnement, dit mode de climatisation habitacle,
[Fig. 9] représente l'évolution temporelle de plusieurs paramètres du procédé de contrôle.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Dans la description qui suit, le terme " un premier élément en amont d'un deuxième élément " signifie que le premier élément est placé avant le deuxième élément par rapport au sens de circulation, ou de parcours, d'un fluide. De manière analogue, le terme " un premier élément en aval d'un deuxième élément " signifie que le premier élément est placé après le deuxième élément par rapport au sens de circulation, ou de parcours, du fluide considéré. Dans le cas du circuit de fluide réfrigérant, le terme « un premier élément est en amont d'un deuxième élément » signifie que le fluide réfrigérant parcourt successivement le premier élément, puis le deuxième élément, sans passer par le dispositif de compression. Autrement dit, le fluide réfrigérant sort du dispositif de compression, traverse éventuellement ou plusieurs éléments, puis traverse le premier élément, puis le deuxième élément, puis regagne le dispositif de compression, éventuellement après avoir traversé d'autres éléments. Le terme « un deuxième élément est placé entre un premier élément et un troisième élément » signifie que le plus court trajet pour passer du premier élément au troisième élément passe par le deuxième élément.

Quand il est précisé qu'un sous-système comporte un élément donné, cela n'exclut pas la présence d'autres éléments dans ce sous-système.

Une unité électronique de contrôle, non représentée sur les figures, reçoit des informations de différents capteurs mesurant notamment les caractéristiques du fluide réfrigérant en divers points du circuit. L'unité électronique de contrôle reçoit également des consignes émises par les occupants du véhicule, comme par exemple la température souhaitée à l'intérieur de l'habitacle. L'unité électronique de contrôle met en œuvre des lois de contrôle permettant le pilotage des différents actionneurs, afin d'assurer le contrôle du système de conditionnement thermique 100 de façon à assurer les consignes reçues.

Chacun des dispositifs de détente employés peut être un détendeur électronique ou un détendeur thermostatique. Dans le cas d'un détendeur électronique, la section de passage permettant de faire passer le fluide réfrigérant peut être ajustée de manière continue entre une position de fermeture et une position d'ouverture maximale. Pour cela, l'unité de contrôle du système pilote un moteur électrique qui déplace un obturateur mobile contrôlant la section de passage offerte au fluide réfrigérant. Pour une position donnée de l'obturateur mobile, on entend par section de passage l'aire d'une section transverse d'un conduit circulaire procurant le même débit, pour un même différentiel de pression entre l'entrée et la sortie du dispositif de détente.

Le dispositif de compression 2 peut être un compresseur électrique, c'est-à-dire un compresseur dont les pièces mobiles sont entrainées par un moteur électrique. Le dispositif de compression 2 comporte un côté aspiration du fluide réfrigérant à basse pression, encore appelé entrée 2a du dispositif de compression, et un côté refoulement du fluide réfrigérant à haute pression, encore appelé sortie 2b du dispositif de compression 2. Les pièces mobiles internes du compresseur 2 font passer le fluide réfrigérant d'une basse pression côté entrée 2a à une haute pression côté sortie 2b. Après détente dans un ou plusieurs dispositifs de détente, le fluide réfrigérant sortant du compresseur 2 revient à l'entrée 2a du compresseur 2 et recommence un nouveau cycle thermodynamique.

Chaque point de raccordement permet au fluide réfrigérant de passer dans l'une ou l'autre des portions de circuit se rejoignant à ce point de raccordement. La répartition du fluide réfrigérant entre les portions de circuit se rejoignant en un point de raccordement se fait en jouant sur l'ouverture ou la fermeture de la, ou des, vanne d'arrêt, clapet anti-retour ou dispositif de détente compris sur chacune des branches. Autrement dit, chaque point de raccordement est un moyen de redirection du fluide réfrigérant arrivant à ce point de raccordement.

Le fluide réfrigérant du circuit de fluide réfrigérant 1 est ici un fluide chimique tel que le R1234yf. D'autres fluides réfrigérants peuvent aussi être employés, comme par exemple le R134a.

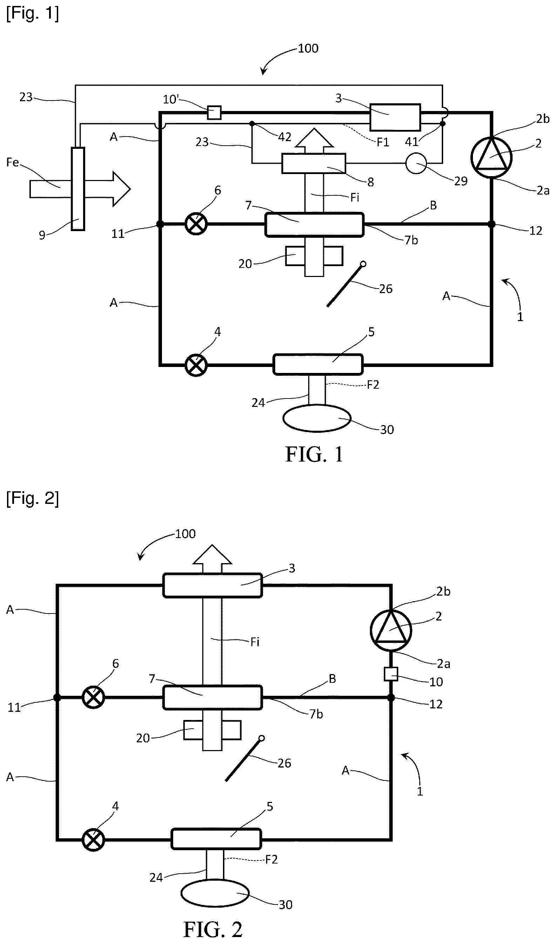

On a représenté sur la figure 1 un système de conditionnement thermique 100 comportant un circuit 1 de fluide réfrigérant configuré pour faire circuler un fluide réfrigérant, le circuit 1 de fluide réfrigérant comportant:
- Une boucle principale A comprenant successivement selon le sens de circulation du fluide réfrigérant:
   -- Un dispositif de compression 2,
   -- Un premier échangeur de chaleur 3 configuré pour échanger de la chaleur avec un premier fluide caloporteur F1,
   -- Un premier dispositif de détente 4,
   -- Un premier évaporateur 5 configuré pour échanger de la chaleur avec un élément 30 d'une chaine de traction d'un véhicule automobile par l'intermédiaire d'un deuxième fluide caloporteur F2,
- Une première branche de dérivation B reliant un premier point de raccordement 11 disposé sur la boucle principale A en aval du premier échangeur de chaleur 3 et en amont du premier dispositif de détente 4 à un deuxième point de raccordement 12 disposé sur la boucle principale A en aval du premier évaporateur 5 et en amont du dispositif de compression 2, la première branche de dérivation B comportant un deuxième dispositif de détente 6 et un deuxième échangeur de chaleur 7 configuré pour échanger de la chaleur avec un flux d'air intérieur Fi à un habitacle du véhicule automobile.

On entend par flux d'air intérieur Fi un flux d'air à destination de l'habitacle du véhicule automobile. Ce flux d'air intérieur Fi peut circuler dans une installation de chauffage, ventilation et/ou climatisation, souvent désignée par le terme Anglais « HVAC » signifiant « Heating, Ventilating and Air Conditioning ». Cette installation n'a pas été représentée sur les différentes figures.

Le système de conditionnement thermique 100 est configuré pour fonctionner selon un mode de fonctionnement dit de refroidissement de la chaine de traction, dans lequel le premier fluide caloporteur F1 reçoit de la chaleur du fluide réfrigérant et le deuxième fluide caloporteur F2 cède de la chaleur au fluide réfrigérant, et dans lequel un débit de fluide réfrigérant à travers le deuxième échangeur de chaleur 7 est nul.

Selon l'exemple représenté ici, l'élément 30 de la chaine de traction électrique est une batterie de stockage d'énergie électrique. La batterie 30 peut notamment fournir l'énergie électrique à un moteur électrique de traction du véhicule. Selon une variante non représentée, l'élément 30 de la chaine de traction électrique peut également être un module électronique de pilotage d'un moteur électrique de traction du véhicule.

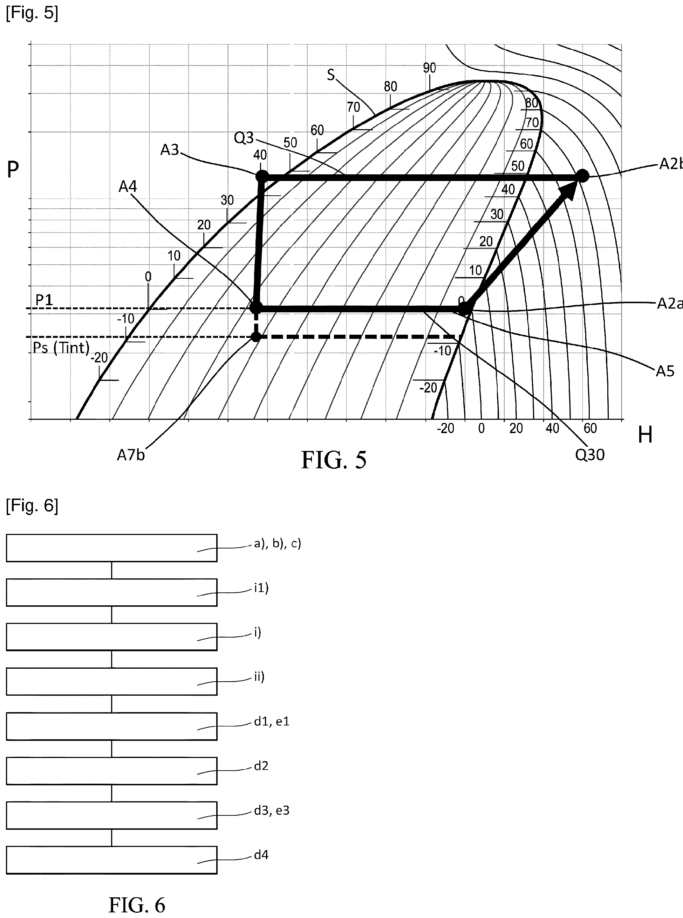

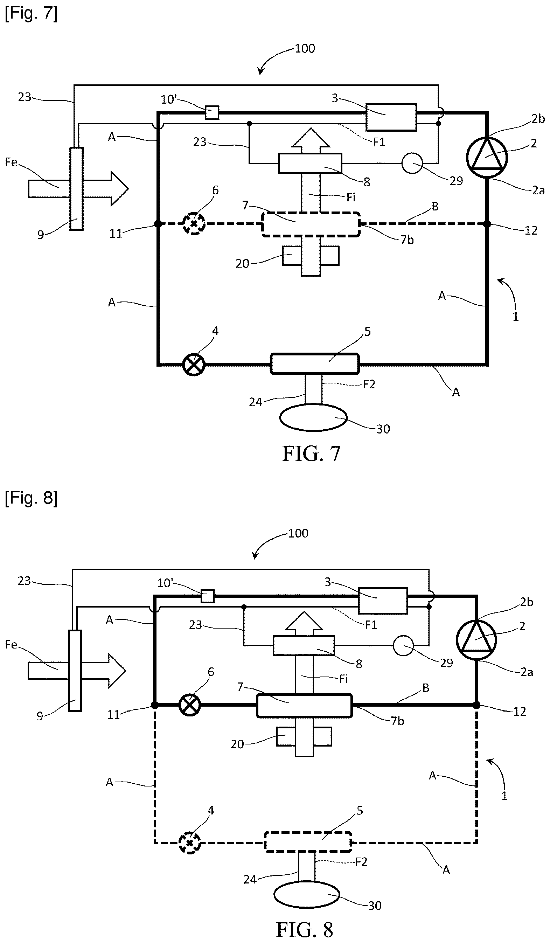

La circulation du fluide réfrigérant dans ce mode de fonctionnement est illustrée sur la figure 7. Sur la figure 7 ainsi que sur la figure 8, les portions de circuit de fluide réfrigérant 1 dans lesquelles du fluide réfrigérant circule sont représentées en traits épais. Les portions dans lesquelles le fluide réfrigérant ne circulent pas sont représentées en traits pointillés. Sur l'exemple représenté, la batterie 30 est refroidie pendant une phase de recharge. La figure 5 est un diagramme pression, enthalpie du fluide réfrigérant lors du cycle thermodynamique réalisé en mode dit de refroidissement de la chaine de traction. Le point A2a illustre l'état du fluide réfrigérant à basse pression en entrée du compresseur 2, le point A2b illustre l'état du fluide réfrigérant à haute pression en sortie du compresseur 2. Le point A3 illustre l'état du fluide réfrigérant à haute pression en sortie du premier échangeur 3. Le point A4 illustre l'état en sortie du premier dispositif de détente 4. Le point A5 illustre l'état en sortie du premier évaporateur 5. Le point A5 et le point A2b sont pour ainsi dire confondus. La ligne désignée par le signe S correspond à la courbe de saturation du fluide réfrigérant. La quantité de chaleur prélevée à la batterie Q30 est schématisée par la différence d'enthalpie entre le point A4 et le point A5. La quantité de chaleur rejetée dans le premier fluide caloporteur F1 au niveau du premier échangeur 3 est schématisée par Q3, et est égale à la variation d'enthalpie entre le point A2b et le point A3. Lorsque l'opération de recharge de la batterie est réalisée par une ambiance froide ou fraiche, la température du flux d'air Fi intérieur à l'habitacle peut être voisine de la température ambiante, supposée ici égale à -10°. La température de la batterie est plus élevée, car le courant de charge échauffe la batterie et la gamme de température optimale pour la batterie est comprise environ entre 25°C et 35°C. La régulation de température réalisée par le système de conditionnement thermique 100 vise donc à assurer une température de la batterie supérieure à la température ambiante alors présente. Sur la figure 5, la température de la batterie est de 0°C. Le diagramme permet de lire les conditions de pression dans le premier évaporateur 5 et dans le deuxième échangeur 7.

Même si le deuxième échangeur 7 est inactif, c'est-à-dire que la circulation de fluide réfrigérant est bloquée car le deuxième dispositif de détente 6 est en position fermée, cet échangeur 7 contient du fluide réfrigérant. La pression de ce fluide réfrigérant est égale à la pression de saturation correspondant à la température régnant au voisinage du deuxième échangeur 7. Comme le fluide réfrigérant en sortie du premier évaporateur 5 est à une pression P1 plus élevée que la pression d'équilibre ou pression de saturation Ps(Tint) régnant dans le deuxième échangeur 7, le fluide réfrigérant sortant du premier évaporateur 5 et regagnant le compresseur 2 peut migrer, au niveau du deuxième point de raccordement 12, vers le deuxième échangeur 7, et s'y condenser. Autrement dit, le fluide réfrigérant circulant dans la boucle principale A et traversant le premier évaporateur 5 s'accumule progressivement dans le deuxième échangeur de chaleur 7. Le point A7b illustre la fraction liquide de fluide réfrigérant dans le deuxième échangeur 7. La fraction liquide peut varier par rapport à ce schéma illustratif. Cette accumulation progressive fait que la quantité de fluide réfrigérant participant aux échanges thermiques peut devenir insuffisante, et la performance du système de conditionnement thermique 100 est dégradée. Cette accumulation intempestive est à éviter.

Pour cela, le procédé de contrôle du système de conditionnement thermique 100 comporte les étapes :
- i) déterminer une pression P1 du fluide réfrigérant en sortie du premier évaporateur 5,
- ii) contrôler, en fonction de la pression P1 déterminée, au moins un paramètre parmi les paramètres suivants: section de passage S4 du premier dispositif de détente 4, section de passage S6 du deuxième dispositif de détente 6, débit Q de fluide réfrigérant fourni par le dispositif de compression 2, température Ti du flux d'air intérieur Fi, pour que la pression P1 du fluide réfrigérant en sortie du premier évaporateur 5 soit inférieure à un seuil de pression prédéterminé Pmax.

On entend, par contrôler un paramètre, l'action de modifier à la demande ce paramètre de façon à obtenir en réaction un effet voulu. Les sections de passages du premier et du deuxième dispositif de détente sont contrôlées par une commande électrique permettant de modifier la position d'un obturateur mobile. Le débit de fluide réfrigérant fourni par le dispositif de compression est contrôlé par le régime de rotation des éléments mobiles du dispositif de compression. La température du deuxième fluide caloporteur est contrôlée en agissant sur un dispositif permettant d'ajuster l'échange thermique entre le deuxième fluide caloporteur et une source de chaleur. L'unité électronique de contrôle peut assurer le contrôle des différents paramètres listés.

En ajustant la valeur d'au moins un paramètre opératoire du système de conditionnement thermique, celui-ci peut fonctionner avec une pression P1 du fluide réfrigérant en sortie du premier évaporateur 5 inférieure à un seuil de pression prédéterminé Pmax. En choisissant une valeur suffisamment faible pour ce seuil Pmax, une migration du fluide réfrigérant depuis le premier évaporateur 5 vers le deuxième échangeur de chaleur 7 est évitée. En effet, il n'y a dans ce cas pas de conditions thermodynamiques favorables à la condensation du fluide réfrigérant dans le deuxième échangeur de chaleur 7. Une accumulation intempestive de fluide réfrigérant liquide dans le deuxième échangeur de chaleur 7 est évitée. Plusieurs paramètres opératoires peuvent être modifiés pour ajuster la valeur de la pression du fluide réfrigérant à une valeur souhaitée. Ces paramètres peuvent être modifiés indépendamment ou de manière complémentaire.

Le procédé de contrôle est un procédé de contrôle de la quantité de fluide réfrigérant circulant dans le circuit de fluide réfrigérant. Autrement dit, le procédé de contrôle permet de contrôler la répartition entre la quantité de fluide réfrigérant à l'état liquide et la quantité de fluide réfrigérant à l'état gazeux dans le circuit 1.

Selon un mode de réalisation, illustré sur la figure 1, le premier fluide caloporteur F1 est un liquide caloporteur configuré pour circuler dans un troisième échangeur de chaleur 8, le troisième échangeur de chaleur 8 étant configuré pour échanger de la chaleur avec le flux d'air Fi intérieur à l'habitacle du véhicule automobile. Le troisième échangeur de chaleur 8 est disposé dans le boîtier de circulation d'air du dispositif de chauffage, ventilation et/ou climatisation. Le troisième échangeur de chaleur 8 est disposé, selon le sens d'écoulement du flux d'air intérieur Fi, en aval du deuxième échangeur de chaleur 7. La flèche Fi schématisant l'écoulement du flux d'air intérieur traverse successivement le deuxième échangeur de chaleur 7 puis le troisième échangeur de chaleur 8. Le premier fluide caloporteur F1 circule dans un circuit 23. Une pompe de circulation 29 fait circuler le premier fluide caloporteur dans le circuit 23. De manière similaire, le deuxième fluide caloporteur F2 circule dans un circuit 24. Le circuit 24 est couplé thermiquement avec l'élément 30 de la chaine de traction du véhicule.

Dans ce mode de réalisation, le premier échangeur de chaleur 3 est un échangeur de chaleur bifluide agencé conjointement sur le circuit de fluide réfrigérant 1 et sur le circuit 23 du premier fluide caloporteur F1 de façon à permettre un échange de chaleur entre le fluide réfrigérant et le premier fluide caloporteur F1. Le premier fluide caloporteur F1 est par exemple un mélange d'eau glycolée. Le chauffage de l'habitacle est ainsi assuré de manière dite indirecte, puisque l'échange thermique entre le fluide réfrigérant et l'air de l'habitacle est réalisé par l'intermédiaire d'un fluide caloporteur intermédiaire. Ce fluide caloporteur intermédiaire circule dans le circuit 23.

Selon un autre mode de réalisation, illustré sur la figure 2, le premier fluide caloporteur F1 est un flux d'air Fi intérieur à l'habitacle du véhicule automobile. Le chauffage de l'habitacle est assuré de manière dite directe, par échange thermique entre le fluide réfrigérant et le flux d'air Fi destiné à l'habitacle.

Le premier échangeur de chaleur 3 est dans ce mode de réalisation disposé dans le boîtier de circulation d'air du dispositif de chauffage, ventilation et/ou climatisation. Un groupe moto-ventilateur, non représenté sur les figures, est disposé dans l'installation de chauffage, ventilation et/ou climatisation afin d'augmenter si nécessaire le débit du flux d'air intérieur Fi. La flèche Fi schématisant l'écoulement du flux d'air intérieur traverse successivement le deuxième échangeur de chaleur 7 puis le premier échangeur de chaleur 3. Le flux d'air intérieur Fi peut être constitué d'une fraction d'air recyclé, c'est-à-dire de l'air qui était déjà présent dans l'habitacle, et d'une fraction d'air renouvelé, c'est-à-dire de l'air qui a été prélevé depuis l'air ambient situé à l'extérieur du véhicule. Diverses ouïes d'entrée d'air et divers volets mobiles permettent d'ajuster la répartition entre la fraction d'air recyclé et la fraction d'air renouvelé de l'habitacle.

On entend par flux d'air extérieur Fe un flux d'air qui n'est pas à destination de l'habitacle du véhicule. Autrement dit, ce flux d'air Fe reste à l'extérieur de l'habitacle du véhicule. Un autre groupe moto-ventilateur, également non représenté, peut être activé afin d'augmenter si nécessaire le débit du flux d'air extérieur Fe. Ce groupe moto-ventilateur est disposé par exemple dans la face avant du véhicule, c'est-à-dire derrière la calandre du véhicule.

Le premier dispositif de détente 4 possède une section de passage ajustable entre une valeur minimale Smin4 et une valeur maximale Smax4. Pour cela, un obturateur mobile, non représenté, peut être déplacé entre deux positions extrêmes. Le déplacement de l'obturateur mobile peut être continu, c'est-à-dire que l'obturateur mobile peut prendre toutes les positions intermédiaires entre les deux positions extrêmes. Autrement dit, le débit traversant le dispositif de détente peut varier de façon continue en fonction de la position de l'obturateur mobile. La valeur maximale de la section de passage correspond à la valeur obtenue lorsque l'obturateur mobile est dans la position d'ouverture maximale. La valeur minimale correspond à la valeur obtenue lorsque l'obturateur mobile est dans la position d'ouverture minimale. La position d'ouverture minimale peut être nulle. On dit alors que le dispositif de détente est en position fermée. L'obturateur mobile peut alors être en contact avec un siège, de sorte que le débit de fluide réfrigérant traversant le dispositif de détente est alors nul. De même, le deuxième dispositif de détente 6 possède une section de passage ajustable entre une valeur minimale Smin6 et une valeur maximale Smax6. Selon des variantes de réalisation non représentées, la position de l'obturateur mobile de chacun des dispositifs de détente peut varier de manière discrète dans un ensemble de positions intermédiaires.

Selon un aspect de l'invention, le procédé comporte les étapes :
- a) déterminer une température Tint du flux d'air intérieur Fi,
- b) déterminer une pression de vapeur saturante Ps du fluide réfrigérant correspondant à la température Tint du flux d'air intérieur Fi,
- c) attribuer la valeur déterminée de la pression de vapeur saturante Ps au seuil de pression prédéterminé Pmax.

Cette valeur du seuil de pression Pmax permet d'éviter un déplacement de la charge de fluide réfrigérant vers le deuxième échangeur de chaleur 7. Le système de conditionnement thermique peut fonctionner de manière stable, sans dérive progressive de ses performances thermiques.

Le système de conditionnement thermique 100 comprend un capteur de mesure de la température du flux d'air intérieur Fi, non représenté. Le capteur peut être une thermistance, par exemple une thermistance à coefficient de température négatif. Le capteur de température peut aussi être un thermocouple. Le capteur est positionné dans le flux d'air Fi, à proximité du deuxième échangeur 7 et de préférence en amont de celui-ci.

Un ajustement de la répartition entre le débit de fluide réfrigérant circulant dans le premier échangeur de chaleur 5 et le débit de fluide réfrigérant circulant dans le deuxième échangeur de chaleur 7 permet d'assurer le contrôle de la pression P1 en sortie du premier évaporateur 5. Ainsi, selon un mode de réalisation, le procédé comporte les étapes :
- d1) réduire la section de passage S4 du premier dispositif de détente 4 jusqu'à une valeur minimale Smin,
- e1) augmenter la section de passage S6 du deuxième dispositif de détente 6 pour qu'un débit de fluide réfrigérant traverse le deuxième échangeur de chaleur 7.

En faisant passer un débit de fluide réfrigérant dans le deuxième échangeur de chaleur 7, des conditions de fonctionnement permettant une évaporation du liquide réfrigérant éventuellement accumulé dans le deuxième échangeur de chaleur 7 sont obtenues.

En effet, la pression du débit de fluide réfrigérant qui traverse le deuxième échangeur de chaleur 7 est alors inférieure à la pression de saturation Ps du fluide réfrigérant pour une température égale à la température Tint du flux d'air intérieur Fi. Ainsi, le fluide réfrigérant liquide accumulé dans le deuxième échangeur de chaleur 4 s'évapore et rejoint la quantité de fluide réfrigérant circulant dans le circuit de fluide réfrigérant 1.

La valeur minimale Smin de la section de passage S4 du premier dispositif de détente 4 peut être nulle. Autrement dit, le premier dispositif de détente 4 est alors en position fermée, et le débit de fluide réfrigérant dans le premier évaporateur 5 est nul. Le refroidissement de la batterie par le premier évaporateur 5 n'est alors plus active. Par débit nul, on entend nul aux fuites près. Le débit de fluide réfrigérant traversant le premier évaporateur 5 est ainsi négligeable par rapport au débit de fluide réfrigérant traversant les échangeurs de chaleur actifs du système de conditionnement thermique 100. Lorsque le seul échangeur actif est le deuxième échangeur 7, le système est en mode climatisation de l'habitacle et assure un refroidissement du flux d'air Fi intérieur à l'habitacle. La circulation du fluide réfrigérant dans ce mode de fonctionnement est illustrée sur la figure 8.

Le système de conditionnement thermique 100 comprend un quatrième échangeur de chaleur 9 configuré pour échanger de la chaleur avec un flux d'air extérieur Fe, le système de conditionnement thermique étant configuré pour faire circuler le premier fluide caloporteur F1 dans le quatrième échangeur de chaleur 9. Le quatrième échangeur de chaleur permet de refroidir le fluide caloporteur circulant dans le premier échangeur de chaleur 3, en dissipant de la chaleur dans le flux d'air extérieur Fe. Le mode climatisation de l'habitacle fait appel à ce fonctionnement. La chaleur extraite du flux d'air intérieur Fi est rejetée dans le premier échangeur 3, puis dans le flux d'air extérieur Fe au niveau du quatrième échangeur thermique 9. Le quatrième échangeur de chaleur 9 est disposé par exemple dans la face avant du véhicule, derrière la calandre du véhicule. Le flux d'air extérieur Fe traverse ainsi la calandre du véhicule puis réalise un échange thermique avec le quatrième échangeur de chaleur 9. La quatrième échangeur 9 est connecté au circuit 23, au niveau de deux points de connexion 41 et 42.

Selon un autre exemple de mise en œuvre du procédé, la valeur minimale Smin de la section de passage S4 du premier dispositif de détente 4 est comprise entre 20% et 50% d'une section maximale de passage Smax du premier dispositif de détente 4.

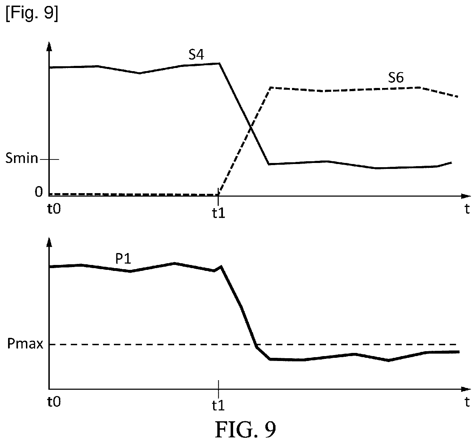

Dans ce cas, un débit de fluide réfrigérant circule dans le premier évaporateur 5 et un débit de fluide réfrigérant circule simultanément dans le deuxième échangeur de chaleur 7. Comme précédemment, la pression du débit de fluide réfrigérant qui traverse le deuxième échangeur de chaleur 7 est inférieure à la pression de saturation Ps(Tint) du fluide réfrigérant correspondant à la température ambiante Tint. Le fluide réfrigérant liquide accumulé dans le deuxième échangeur de chaleur 7 peut ainsi s'évaporer, et rejoindre la quantité de fluide réfrigérant circulant dans le circuit de fluide réfrigérant 1. Le refroidissement de l'élément 30 de la chaine de traction du véhicule reste alors active, avec une puissance thermique de refroidissement réduite. Un refroidissement de l'air de l'habitacle est assuré simultanément. Ce cas de figure est illustré sur la figure 9, qui représente de manière schématique l'évolution en fonction du temps de la section de passage S4 du premier dispositif de détente 4, de la section de passage S6 du deuxième dispositif de détente 6, et de la pression P1 du fluide réfrigérant en sortie du premier évaporateur 5. A l'instant t0, la pression P1 est supérieure au seuil de pression maximale admissible Pmax, de sorte qu'une migration de fluide réfrigérant vers le deuxième échangeur 7 est possible. A l'instant t1, l'étape ii) de contrôle de la pression P1 du fluide réfrigérant en sortie du premier évaporateur 5 est appliquée. La section de passage S4 du premier dispositif de détente 4 est diminuée, sans être annulée. La section de passage S6 du deuxième dispositif de détente 6 est augmentée. La pression P1 diminue et devient inférieure au seuil de pression prédéterminé Pmax.

Le contrôle du débit Q de fluide réfrigérant à haute pression fourni par le dispositif de compression 2 est une autre manière d'assurer le contrôle de la pression P1 en sortie du premier évaporateur 5. Selon un autre aspect du procédé, dans lequel le dispositif de compression 2 est du type rotatif, le procédé comporte l'étape :
- d2) augmenter un régime de rotation du dispositif de compression 2 jusqu'à une valeur supérieure à un seuil de régime prédéterminé Nmin.

Une augmentation du régime de rotation du dispositif de compression, permettant d'augmenter le débit de fluide réfrigérant à haute pression refoulé, est une manière de faire chuter la pression du fluide réfrigérant dans le premier évaporateur 5.

Pour cela, le moteur électrique d'entrainement des organes mobiles du dispositif de compression 2 est commandé par l'unité électronique de contrôle de façon à obtenir un régime de rotation de consigne. La valeur du régime de rotation de consigne choisie est ici supérieure au seuil de régime prédéterminé Nmin. Cette valeur du régime de rotation permet d'obtenir un débit de fluide réfrigérant suffisamment élevé pour que la pression dans le premier évaporateur 5 chute à une valeur suffisamment faible. Ainsi, le fluide réfrigérant à basse pression en sortie du premier échangeur de chaleur 5 ne peut pas rejoindre le deuxième échangeur de chaleur 7.

Le dispositif de compression 2 possède un régime de rotation maximal Nmax, et le seuil de régime prédéterminé Nmin est supérieur à 80% du régime de rotation maximal Nmax. Le régime de rotation maximal Nmax est par exemple égal à 6000 tr/min. Le régime prédéterminé permettant d'assurer que la pression P1 du fluide réfrigérant en sortie du premier évaporateur 5 soit inférieure au seuil de pression prédéterminé Pmax est par exemple de 5000 tr/min.

Le contrôle de la section de passage du premier dispositif de détente 4, tout en laissant le système de conditionnement thermique 100 fonctionner selon le mode dit de récupération d'énergie, est une autre manière d'assurer le contrôle de la pression P1 en sortie du premier évaporateur 5. Ainsi, le procédé comporte les étapes :
- d3) diminuer la section de passage du premier dispositif de détente 4,
- e3) maintenir la section de passage du deuxième dispositif de détente 6 à une valeur nulle.

La diminution de la section de passage du premier dispositif de détente 4 dégrade l'échange thermique dans le premier évaporateur 5. La température et donc la pression du fluide réfrigérant diminuent pour maintenir le même niveau d'échange thermique dans le système. L'étape de diminution de la section de passage du premier dispositif de détente est itérée jusqu'à ce que la pression P1 du fluide réfrigérant en sortie du premier évaporateur 5 soit inférieure au seuil de pression prédéterminé Pmax.

Selon un mode de mise en œuvre du procédé, l'étape ii) est répétée en continu lorsque le système de conditionnement thermique 100 est en fonctionnement.

Cet aspect du procédé de contrôle est appliqué particulièrement lorsque le circuit de fluide réfrigérant ne comporte aucun dispositif restreignant la circulation de fluide réfrigérant du deuxième point de raccordement 12 vers la sortie 7b du deuxième échangeur de chaleur 7. Ce cas de figure correspond aux figures 1 et 2.

Autrement dit, la pression P1 du fluide réfrigérant en sortie du premier évaporateur 5 est maintenue en dessous du seuil de pression prédéterminé Pmax pendant toute la durée pendant laquelle le système de conditionnement thermique 100 est en fonctionnement. Autrement dit, le contrôle de la pression P1 du fluide réfrigérant en sortie du premier évaporateur 5 peut être réalisé en permanence lorsque le système fonctionne, de manière à éviter une accumulation progressive du fluide réfrigérant dans le deuxième échangeur de chaleur 7.

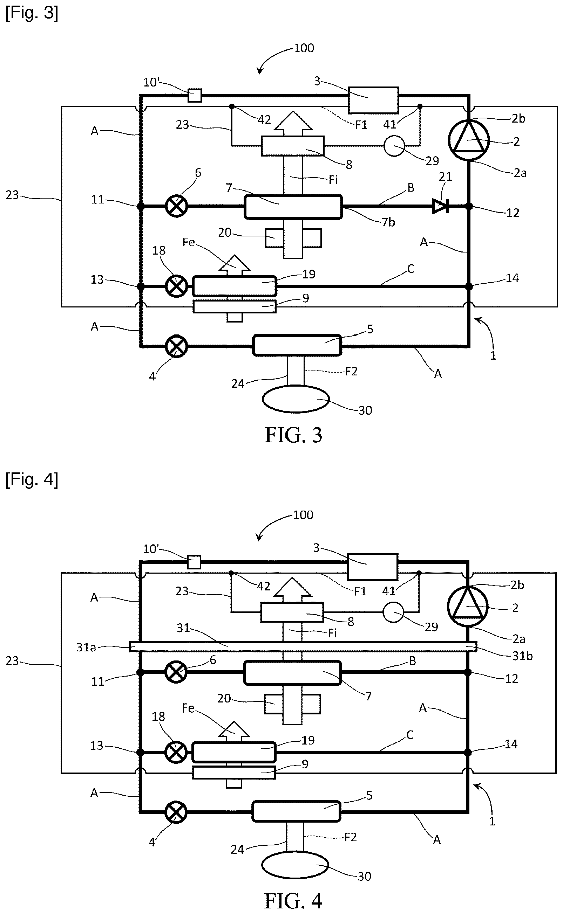

Selon un autre mode de mise en œuvre du procédé, le circuit 1 de fluide réfrigérant comporte un clapet antiretour 21 disposé sur la première branche de dérivation B en aval du deuxième échangeur de chaleur 7 et en amont du deuxième point de raccordement 12, le clapet antiretour 21 étant configuré pour bloquer une circulation du fluide réfrigérant du deuxième point de raccordement 12 vers une sortie 7b du deuxième échangeur de chaleur 7. La figure 3 décrit illustre cette configuration. Le clapet anti-retour 21 est un organe passif, c'est-à-dire sans commande électrique.

Selon une variante non représentée, le circuit 1 de fluide réfrigérant comporte une vanne d'arrêt disposé sur la première branche de dérivation B en aval du deuxième échangeur de chaleur 7 et en amont du deuxième point de raccordement 12. La vanne d'arrêt est commandée électriquement par l'unité électronique de contrôle. Lorsque la vanne d'arrêt est en position fermée, la circulation du fluide réfrigérant depuis le deuxième point de raccordement 12 vers la sortie 7b du deuxième échangeur de chaleur 7 est bloquée.

Le procédé de contrôle peut comporter avant l'étape ii) une étape :
- i1) détecter une accumulation de fluide réfrigérant dans le deuxième échangeur de chaleur 7,
et l'étape ii) est mise en œuvre uniquement si une accumulation de fluide réfrigérant dans le deuxième échangeur de chaleur 7 est détectée à l'étape i1).

Dans ce mode de réalisation, le clapet anti-retour 21, ou la vanne d'arrêt si elle utilisée à la place du clapet anti-retour 21, permet de limiter la circulation du fluide réfrigérant vers le deuxième échangeur de chaleur 7. L'accumulation du fluide réfrigérant liquide est ainsi ralentie par rapport à un système ne comportant aucun dispositif de restriction de la circulation de fluide réfrigérant vers la sortie 7b du deuxième échangeur 7. Il est ainsi possible d'appliquer l'étape de contrôle de la pression du fluide réfrigérant en sortie du premier évaporateur 5 uniquement lorsqu'elle est nécessaire. Un fonctionnement temporaire dans des conditions générant un différentiel de pression permettant une migration et une condensation du fluide réfrigérant dans le deuxième échangeur 7 est acceptable, car l'accumulation est alors lente.

La détection de l'accumulation de fluide réfrigérant dans le deuxième échangeur de chaleur 7 intervient lorsque le système a fonctionné pendant une durée suffisante dans des conditions où la pression P1 du fluide réfrigérant en sortie du premier évaporateur 5 était supérieure à la pression de vapeur saturante correspondant à la température du flux d'air intérieur Fi. L'étape de contrôle appliqué permet de faire repasser la pression P1 du fluide réfrigérant en sortie du premier évaporateur 5 à une valeur inférieure à la pression de vapeur saturante Ps correspondant à la température Tint du flux d'air intérieur Fi, ce qui permet d'évaporer le fluide réfrigérant préalablement passé à l'état liquide dans le deuxième échangeur de chaleur 7.

Selon un aspect de l'invention, l'étape ii) est suivie par une étape de fonctionnement selon un mode dit de refroidissement de la chaine de traction dans lequel le premier fluide caloporteur F1 reçoit de la chaleur du fluide réfrigérant et le deuxième fluide caloporteur F2 cède de la chaleur au fluide réfrigérant, et dans lequel un débit de fluide réfrigérant à travers le deuxième échangeur de chaleur 7 est nul. Autrement dit, l'évaporation du fluide réfrigérant dans le premier évaporateur 5 absorbe de la chaleur du deuxième fluide caloporteur F2 et refroidit l'élément 30 de la chaine de traction du véhicule, qui est ici une batterie de stockage d'énergie électrique. Le deuxième échangeur 7 n'est lui pas actif thermiquement, puisque aucun débit de fluide réfrigérant n'y circule.

Un fonctionnement selon le mode de refroidissement de la chaine de traction est réactivé lorsque le liquide réfrigérant accumulé a été vaporisé grâce au contrôle de la pression dans le premier évaporateur 5. Le refroidissement de l'élément 30 de la chaine de traction du véhicule est ainsi maximisé.

Autrement dit, lorsqu'une accumulation de fluide réfrigérant liquide est détectée, le système de conditionnement thermique 100 passe dans un mode de fonctionnement permettant de vaporiser le fluide réfrigérant accumulé, afin que celui-ci recommence à circuler et à participer aux échanges thermiques. Lorsque ce mode de fonctionnement n'est plus nécessaire, car tout le réfrigérant liquide accumulé a été vaporisé, le système de conditionnement thermique 100 repasse dans le mode de fonctionnement initial. Le fonctionnement du système de conditionnement thermique 100 comprend une succession de phases durant lesquelles le fluide réfrigérant s'accumule sous forme liquide, et de phases durant lesquelles une évaporation du réfrigérant liquide accumulé est provoquée, grâce au contrôle actif de la valeur de la pression du fluide réfrigérant dans le premier évaporateur 5. La durée de fonctionnement selon la phase permettant l'évaporation du fluide réfrigérant dans le deuxième échangeur de chaleur 7 est par exemple de l'ordre de 1 minute pour une température ambiante de -5°C. Cette phase peut être déclenchée après un fonctionnement d'environ 2 heures en mode refroidissement de la chaine de traction, pendant lequel la pression dans le premier évaporateur 5 est supérieure à la pression de saturation Ps correspondant à la température de l'air au voisinage du deuxième échangeur 7.

On décrira maintenant divers moyens de détection une accumulation excessive de fluide réfrigérant liquide dans le deuxième échangeur de chaleur 7.

Selon un exemple de mise en œuvre du procédé,
l'étape i1) de détection d'une accumulation de fluide réfrigérant dans le deuxième échangeur de chaleur 7 comprend les sous-étapes :
- déterminer une température du deuxième fluide caloporteur F2 en sortie du premier évaporateur 5,
- si la température déterminée est supérieure à un premier seuil prédéterminé Th1, détecter une accumulation de fluide réfrigérant dans le deuxième échangeur de chaleur 7.

En variante ou de manière complémentaire,
l'étape i1) de détection d'une accumulation de fluide réfrigérant dans le deuxième échangeur de chaleur 7 comprend les sous-étapes :
- déterminer une vitesse de variation de la température T2 du deuxième fluide caloporteur F2 en sortie du premier évaporateur 5,
- si la vitesse de variation déterminée est supérieure à un deuxième seuil prédéterminé Th2, détecter une accumulation de fluide réfrigérant dans le deuxième échangeur de chaleur 7.

Une augmentation trop rapide de la température du deuxième fluide caloporteur F2 est un indicateur d'un manque de fluide réfrigérant circulant dans le circuit 1, autrement dit d'une accumulation excessive de réfrigérant liquide. Une surveillance de la température du deuxième fluide caloporteur permet donc de détecter l'accumulation de fluide réfrigérant dans le deuxième échangeur de chaleur 7.

Selon un exemple de mise en œuvre, le seuil prédéterminé Th2 dépend d'une puissance électrique de l'élément 30 de la chaine de transmission. Plus la puissance électrique, par exemple la puissance électrique de charge de la batterie, est élevée, plus le seuil Th2 est élevé.

Selon un mode de réalisation, dans lequel le système de conditionnement thermique comprend un dispositif d'accumulation de fluide réfrigérant 10' disposé sur la boucle principale A en aval du premier échangeur 3 et en amont du premier point de raccordement 11,
l'étape de détection d'une accumulation de fluide réfrigérant dans le deuxième échangeur de chaleur 7 comprend les sous-étapes :
- déterminer une valeur de surchauffe sh du fluide réfrigérant en sortie du premier évaporateur 5,
- si la surchauffe sh déterminée est supérieur à un troisième seuil prédéterminé Th3, détecter une accumulation de fluide réfrigérant dans le deuxième échangeur de chaleur 7.

Lorsque l'architecture du dispositif de conditionnement permet une surchauffe du fluide réfrigérant en entrée du dispositif de compression, une surchauffe excessive indique un manque de fluide réfrigérant circulant dans le circuit. La surchauffe sh est égale, par définition, à la différence entre la température réelle du fluide réfrigérant en sortie du premier évaporateur 5 et la température de condensation du fluide réfrigérant pour la pression régnant dans le premier évaporateur 5. Cette architecture est illustrée notamment sur les figures 1 et 3.

Selon un autre mode de réalisation, dans lequel le système de conditionnement thermique comprend un dispositif d'accumulation de fluide réfrigérant 10 disposé sur la boucle principale A en aval du deuxième point de raccordement 12 et en amont du dispositif de compression 2,
l'étape de détection d'une accumulation de fluide réfrigérant dans le deuxième échangeur de chaleur 7 comprend les sous-étapes :
- déterminer une valeur de sous-refroidissement sc du fluide réfrigérant en entrée du premier dispositif de détente 4,
- si le sous-refroidissement sc déterminé est inférieur à un quatrième seuil prédéterminé Th4, détecter une accumulation de fluide réfrigérant dans le deuxième échangeur de chaleur 7.

Lorsque l'architecture du dispositif de conditionnement permet un sous-refroidissement du fluide réfrigérant en sortie du premier échangeur de chaleur, autrement dit en entrée du premier dispositif de détente, une valeur trop faible du sous-refroidissement indique un manque de fluide réfrigérant dans le circuit. La valeur du sous-refroidissement sc est égale, par définition, à la différence entre la température réelle du fluide réfrigérant en entrée du premier dispositif de détente 4 et la température de condensation du fluide réfrigérant pour la pression régnant à l'entrée du premier dispositif de détente 4. Cette architecture est illustrée sur la figure 2.

Une fois qu'une accumulation excessive de fluide réfrigérant dans le deuxième échangeur de chaleur 7 est détectée, l'étape ii) de contrôle de la pression en sortie du premier évaporateur 5 est activée afin de provoquer l'évaporation du réfrigérant accumulé.

Selon un mode de mise en œuvre du procédé, l'étape ii) de contrôle de la pression P1 du fluide réfrigérant en sortie du premier évaporateur 5 est appliquée pendant une durée prédéterminée Dapp.

Selon un exemple de mise en œuvre, la durée prédéterminée Dapp dépend de la température du flux d'air intérieur Fi.

Selon un autre exemple de mise en œuvre, le procédé comporte les étapes :
- a) déterminer une température Tint du flux d'air intérieur Fi,
- b) déterminer une pression de vapeur saturante Ps du fluide réfrigérant pour la valeur déterminée de la température Tint du flux d'air intérieur Fi,
- c) déterminer la différence entre la pression de vapeur saturante Ps du fluide réfrigérant pour la valeur déterminée de la température Tint du flux d'air intérieur Fi et le seuil prédéterminé Pmax,
et la durée prédéterminée Dapp dépend de la différence déterminée à l'étape c).

La durée d'application de la phase de contrôle de la pression, permettant l'évaporation du fluide réfrigérant dans le deuxième échangeur de chaleur 7, est par exemple de l'ordre de 1 minute pour une température du flux d'air intérieur Fi de l'ordre de -5°C.

Le procédé décrit peut être appliqué sur des architectures de système de conditionnement thermique comportant des échangeurs de chaleur supplémentaires. La figure 3 et la figure 4 schématisent une telle configuration.

Selon un mode de réalisation, le système de conditionnement thermique comprend une deuxième branche de dérivation C reliant un troisième point de raccordement 13 disposé sur la boucle principale A en aval du premier point de raccordement 11 et en amont du premier dispositif de détente 4 à un quatrième point de raccordement 14 disposé sur la boucle principale A en aval du premier évaporateur 5 et en amont du deuxième point de raccordement 12, la deuxième branche de dérivation C comportant un troisième dispositif de détente 18 et un troisième échangeur de chaleur 19 configuré pour échanger de la chaleur avec un flux d'air extérieur Fe à un habitacle du véhicule automobile. Le quatrième échangeur de chaleur 9 est disposé en amont, selon le sens d'écoulement du flux d'air extérieur Fe, du troisième échangeur de chaleur 19.

Le troisième échangeur de chaleur 19 permet d'assurer un fonctionnement en mode pompe à chaleur. Autrement dit, la chaleur permettant la vaporisation du fluide réfrigérant dans le troisième échangeur de chaleur 19 est prélevée sur le flux d'air extérieur Fe, et est transférée au flux d'air Fi intérieur à l'habitacle. Ce transfert peut être réalisé de manière directe, ou de manière indirecte par l'intermédiaire du premier fluide caloporteur F1.

Selon le mode de réalisation des figures 3 et 4, le système de conditionnement thermique 100 comprend un échangeur de chaleur interne 31 disposé conjointement sur la boucle principale A en aval du premier échangeur de chaleur 3 et en amont du premier point de raccordement 11, et sur la boucle principale A en aval du deuxième point de raccordement 12 et en amont du dispositif de compression 2. L'échangeur de chaleur interne 31 permet d'augmenter la variation d'enthalpie du fluide réfrigérant au cours du cycle thermodynamique et améliore l'efficacité du système.

L'échangeur de chaleur interne 31 comporte une première section d'échange thermique 31a disposée sur la boucle principale en aval du premier échangeur de chaleur 3 et en amont du premier point de raccordement 11. L'échangeur de chaleur interne 31 comporte une deuxième section d'échange thermique 31b disposée également sur la boucle principale A en aval du deuxième point de raccordement 12 et en amont du dispositif de compression 2. L'échangeur de chaleur interne 31 est configuré pour permettre un échange de chaleur entre le fluide réfrigérant dans la première section d'échange thermique 31a et le fluide réfrigérant dans la deuxième section d'échange thermique 31b.

Selon un autre exemple de mise en œuvre, le procédé comporte les étapes : - Chauffer le flux d'air intérieur Fi pour que la pression P1 du fluide réfrigérant en sortie du premier évaporateur 5 soit inférieure à un seuil prédéterminé Pmax.

En chauffant l'air environnant le deuxième échangeur de chaleur 7 qui est ici l'évaporateur habitacle, cet évaporateur 7 cesse d'être un point froid du circuit de fluide réfrigérant, point froid dans lequel le fluide réfrigérant est susceptible de s'accumuler à l'état liquide. Autrement dit, le fait de chauffer le flux d'air au voisinage du deuxième échangeur 7 permet de faire remonter la valeur de la pression correspondant au point A7b sur la figure 5, de façon à réduire et progressivement éliminer le différentiel de pression entre le point A5 et le point A7b. En effet, l'augmentation de la température du flux d'air intérieur au voisinage du deuxième échangeur 7 permet de faire remonter la valeur de la pression de vapeur saturante dans le deuxième échangeur 7. Le seuil de pression maximale admissible Pmax prend ainsi une valeur plus élevée lorsque l'air environnant le deuxième échangeur de chaleur 7 est chauffé que lorsque l'air environnant le deuxième échangeur de chaleur 7 n'est pas chauffé. Le seuil Pmax peut par exemple être pris égal à la pression de condensation du fluide réfrigérant pour la température correspondant à la température de l'air environnant le deuxième échangeur de chaleur 7.

Selon un exemple de mise en œuvre du procédé, le système de conditionnement thermique 100 comprend un dispositif de chauffage électrique 20, et le chauffage du flux d'air intérieur Fi est réalisé par l'activation d'un dispositif de chauffage électrique 20.

Le dispositif de chauffage électrique 20 est par exemple une résistance chauffante. Le dispositif de chauffage électrique 20 est disposé au voisinage du deuxième échangeur de chaleur 7 de façon à augmenter localement la température du milieu environnant le deuxième échangeur de chaleur 20. Sur les figures, le dispositif de chauffage électrique 20 est disposé en amont du troisième échangeur de chaleur 8. Selon une variante non illustrée, le dispositif de chauffage électrique 20 peut être disposé en aval du troisième échangeur de chaleur 8. Il n'est pas nécessaire de chauffer l'ensemble de l'habitacle du véhicule. Le débit du flux d'air intérieur Fi est alors nul où limité à une valeur très faible, de façon à ne pas dissiper la chaleur du dispositif de chauffage 20 dans l'ensemble de l'habitacle du véhicule.

Le procédé comprend ainsi l'étape :
- Activer le dispositif de chauffage électrique 20 pendant une durée prédéterminée.

En variante ou de manière complémentaire, le procédé peut comprendre les étapes :
- faire fonctionner le système de conditionnement thermique selon un mode dit de récupération d'énergie dans lequel le premier fluide caloporteur F1 reçoit de la chaleur du fluide réfrigérant et le deuxième fluide caloporteur F2 cède de la chaleur au fluide réfrigérant, pour chauffer le flux d'air intérieur Fi,
- contrôler le débit du flux d'air intérieur Fi à une valeur inférieure à un seuil prédéterminé.

Le premier fluide caloporteur F1 chauffe le flux d'air intérieur Fi par l'intermédiaire du troisième échangeur de chaleur 8. Cette étape est appliquée avant de faire fonctionner le système de conditionnement thermique en mode refroidissement batterie. Cette étape permet d'augmenter la température au voisinage du deuxième échangeur 7 afin d'éviter que celui ne constitue un point froid pendant la phase de refroidissement batterie. En utilisant de la chaleur extraite de la batterie 30 afin de chauffer l'habitacle, la puissance fournie par le dispositif de chauffage 20 peut être réduite, ou dans certains cas complètement supprimée. Cette étape permet également de refroidir la batterie avant de démarrer une phase de charge, ou dès le début d'une phase de charge. Ce refroidissement permet de préconditionner la batterie avant une phase de charge rapide. En effet, dans le cas d'une charge rapide sous forte puissance électrique, il peut être difficile de maintenir la batterie à sa température de consigne pendant toute la durée de la charge, car la puissance thermique à évacuer peut être supérieure à la puissance maximale que le premier évaporateur 5 peut dissiper. Le fait d'assurer un refroidissement de la batterie avant même que la charge rapide débute permet un meilleur suivi de la consigne de température en fin de charge.

Selon un mode de réalisation, le système de conditionnement thermique comprend un volet mobile 26 configuré pour régler un taux de recirculation du flux d'air intérieur Fi,
et le procédé comprend l'étape :
- contrôler la position du volet mobile 26 pour que le taux de recirculation du flux d'air intérieur Fi soit supérieur à un seuil prédéterminé Fmax.

Le volet mobile 26 permet de régler la quantité d'air extérieur qui peut parvenir jusqu'à l'habitacle du véhicule. Lorsque le volet 26 prend une position bloquant l'entrée dans l'habitacle d'air frais provenant de l'extérieur du véhicule, le flux d'air intérieur Fi est composé d'air entièrement recirculé. A l'inverse, le volet mobile 26 peut prendre une position dans laquelle le flux d'air extérieur qui rentre dans l'habitacle est maximal. La position du volet 26 est ajustable de manière continue entre ces deux positions extrêmes.

En maintenant le renouvellement d'air de l'habitacle à une faible valeur, c'est-à-dire en minimisant l'apport d'air frais, l'énergie nécessaire à maintenir la température au voisinage du deuxième échangeur de chaleur 7 est réduite.

Selon une variante de mise en œuvre, le seuil prédéterminé Fmax du taux de recirculation du flux d'air intérieur Fi est constant.

Suivant une autre variante de mise en œuvre, le procédé comporte l'étape :
- détecter une présence d'au moins un occupant dans l'habitacle du véhicule,
- si la présence d'au moins un occupant est détectée, attribuer une première valeur Fmax1 au seuil prédéterminé Fmax du taux de recirculation du flux d'air intérieur Fi,
- sinon attribuer une deuxième valeur Fmax2 au seuil prédéterminé Fmax du taux de recirculation du flux d'air intérieur Fi, la deuxième valeur Fmax2 étant supérieure à la première valeur Fmax1.

La première valeur Fmax1 du seuil prédéterminé Fmax du taux de recirculation du flux d'air intérieur Fi est comprise entre 10% et 60%. La deuxième valeur Fmax2 du seuil prédéterminé Fmax du taux de recirculation du flux d'air intérieur Fi est comprise entre 60% et 100%.

Lorsque la présence d'au moins un occupant est détectée, un renouvellement minimal de l'air de l'habitacle doit être assuré afin que l'air de habitacle reste sain. Lorsque au contraire aucun occupant n'est détecté dans le véhicule, le besoin de renouvellement d'air est plus faible et l'apport d'air extérieur peut être très faible, ce qui permet de conserver la chaleur de l'habitacle. L'énergie à fournir pour que la température au voisinage du deuxième échangeur de chaleur 7 reste suffisante pour éviter la migration du fluide réfrigérant peut ainsi être réduite en l'absence d'occupants dans le véhicule. Ce cas de figure correspond à la situation où les occupants ont quitté le véhicule pendant que la batterie du véhicule est en charge. L'efficacité énergétique du véhicule est ainsi améliorée.

La présence d'au moins un occupant dans le véhicule est détectée par exemple en fonction de la réponse de capteurs de pression disposés dans les sièges du véhicule.

## Revendications

1. Procédé de contrôle d'un système de conditionnement thermique (100), le système de conditionnement thermique (100) comportant un circuit (1) de fluide réfrigérant configuré pour faire circuler un fluide réfrigérant, le circuit (1) de fluide réfrigérant comportant:
- Une boucle principale (A) comprenant successivement selon le sens de circulation du fluide réfrigérant:
-- Un dispositif de compression (2),
-- Un premier échangeur de chaleur (3) configuré pour échanger de la chaleur avec un premier fluide caloporteur (F1),
-- Un premier dispositif de détente (4),
-- Un premier évaporateur (5) configuré pour échanger de la chaleur avec un élément (30) d'une chaine de traction d'un véhicule automobile par l'intermédiaire d'un deuxième fluide caloporteur (F2),
- Une première branche de dérivation (B) reliant un premier point de raccordement (11) disposé sur la boucle principale (A) en aval du premier échangeur de chaleur (3) et en amont du premier dispositif de détente (4) à un deuxième point de raccordement (12) disposé sur la boucle principale (A) en aval du premier évaporateur (5) et en amont du dispositif de compression (2), la première branche de dérivation (B) comportant un deuxième dispositif de détente (6) et un deuxième échangeur de chaleur (7) configuré pour échanger de la chaleur avec un flux d'air intérieur (Fi) à un habitacle du véhicule automobile,
le système de conditionnement thermique étant configuré pour fonctionner selon un mode de fonctionnement dit de refroidissement de la chaine de traction dans lequel le premier fluide caloporteur (F1) reçoit de la chaleur du fluide réfrigérant et le deuxième fluide caloporteur (F2) cède de la chaleur au fluide réfrigérant, et dans lequel un débit de fluide réfrigérant à travers le deuxième échangeur de chaleur (7) est nul,
le procédé étant **caractérisé en ce qu'**il comporte les étapes :
- a) déterminer une température (Tint) du flux d'air intérieur (Fi),
- b) déterminer une pression de vapeur saturante (Ps) du fluide réfrigérant correspondant à la température (Tint) du flux d'air intérieur (Fi),
- i) déterminer une pression (P1) du fluide réfrigérant en sortie du premier évaporateur (5),
- ii) contrôler, en fonction de la pression (P1) déterminée, au moins un paramètre parmi les paramètres suivants: section de passage (S4) du premier dispositif de détente (4), section de passage (S6) du deuxième dispositif de détente (6), débit (Q) de fluide réfrigérant fourni par le dispositif de compression (2), température (Ti) du flux d'air intérieur (Fi), pour que la pression (P1) du fluide réfrigérant en sortie du premier évaporateur (5) soit inférieure à la valeur déterminée de la pression de vapeur saturante (Ps).

2. Procédé selon la revendication 1, comportant les étapes :
- d1) réduire la section de passage (S4) du premier dispositif de détente (4) jusqu'à une valeur minimale (Smin),
- e1) augmenter la section de passage (S6) du deuxième dispositif de détente (6) pour qu'un débit de fluide réfrigérant traverse le deuxième échangeur de chaleur (7).

3. Procédé selon l'une des revendications précédentes, dans lequel l'étape ii) est répétée en continu lorsque le système de conditionnement thermique (100) est en fonctionnement.

4. Procédé selon l'une des revendications 1 ou 2, dans lequel le circuit (1) de fluide réfrigérant comporte un clapet antiretour (21) disposé sur la première branche de dérivation (B) en aval du deuxième échangeur de chaleur (7) et en amont du deuxième point de raccordement (12), le clapet antiretour (21) étant configuré pour bloquer une circulation du fluide réfrigérant du deuxième point de raccordement (12) vers une sortie (7b) du deuxième échangeur de chaleur (7).

5. Procédé selon l'une des revendications 1 ou 2, comportant avant l'étape ii) une étape :
- i1) détecter une accumulation de fluide réfrigérant dans le deuxième échangeur de chaleur (7),
et dans lequel l'étape ii) est mise en œuvre uniquement si une accumulation de fluide réfrigérant dans le deuxième échangeur de chaleur (7) est détectée à l'étape i1).

6. Procédé selon la revendication 5, dans lequel le système de conditionnement thermique comprend un dispositif d'accumulation de fluide réfrigérant (10') disposé sur la boucle principale (A) en aval du premier échangeur (3) et en amont du premier point de raccordement (11),
et dans lequel l'étape de détection d'une accumulation de fluide réfrigérant dans le deuxième échangeur de chaleur (7) comprend les sous-étapes :
- déterminer une valeur de surchauffe (sh) du fluide réfrigérant en sortie du premier évaporateur (5),
- si la surchauffe (sh) déterminée est supérieur à un troisième seuil prédéterminé (Th3), détecter une accumulation de fluide réfrigérant dans le deuxième échangeur de chaleur (7).

7. Procédé selon la revendication 5, dans lequel le système de conditionnement thermique comprend un dispositif d'accumulation de fluide réfrigérant (10) disposé sur la boucle principale (A) en aval du deuxième point de raccordement (12) et en amont du dispositif de compression (2),
et dans lequel l'étape de détection d'une accumulation de fluide réfrigérant dans le deuxième échangeur de chaleur (7) comprend les sous-étapes :
- déterminer une valeur de sous-refroidissement (sc) du fluide réfrigérant en entrée du premier dispositif de détente (4),
- si le sous-refroidissement (sc) déterminé est inférieur à un quatrième seuil prédéterminé (Th4), détecter une accumulation de fluide réfrigérant dans le deuxième échangeur de chaleur (7).

8. Procédé selon l'une des revendications précédentes, comportant les étapes :
- Chauffer le flux d'air intérieur (Fi) pour que la pression (P1) du fluide réfrigérant en sortie du premier évaporateur (5) soit inférieure à un seuil prédéterminé (Pmax).

9. Procédé selon la revendication précédente, dans lequel le système de conditionnement thermique (100) comprend un dispositif de chauffage électrique (20), et dans lequel le chauffage du flux d'air intérieur (Fi) est réalisé par l'activation d'un dispositif de chauffage électrique (20).

10. Procédé selon la revendication 8 ou 9, comportant les étapes :
- faire fonctionner le système de conditionnement thermique selon un mode dit de récupération d'énergie dans lequel le premier fluide caloporteur (F1) reçoit de la chaleur du fluide réfrigérant et le deuxième fluide caloporteur (F2) cède de la chaleur au fluide réfrigérant, pour chauffer le flux d'air intérieur (Fi),
- contrôler le débit du flux d'air intérieur (Fi) à une valeur inférieure à un seuil prédéterminé.

11. Procédé selon la revendication précédente, dans lequel le système de conditionnement thermique comprend un volet mobile (26) configuré pour régler un taux de recirculation du flux d'air intérieur (Fi),
dans lequel le procédé comprend l'étape :
- contrôler la position du volet mobile (26) pour que le taux de recirculation du flux d'air intérieur (Fi) soit supérieur à un seuil prédéterminé (Fmax).

12. Procédé selon la revendication précédente, comportant l'étape :
- détecter une présence d'au moins un occupant dans l'habitacle du véhicule,
- si la présence d'au moins un occupant est détectée, attribuer une première valeur (Fmax1) au seuil prédéterminé (Fmax) du taux de recirculation du flux d'air intérieur (Fi),
- sinon attribuer une deuxième valeur (Fmax2) au seuil prédéterminé (Fmax) du taux de recirculation du flux d'air intérieur (Fi), la deuxième valeur (Fmax2) étant supérieure à la première valeur (Fmax1).

## Patentansprüche

1. Verfahren zur Steuerung eines Thermokonditionierungssystems (100), wobei das Thermokonditionierungssystem (100) einen Kältemittelkreislauf (1) umfasst, der dazu konfiguriert ist, ein Kältemittel zirkulieren zu lassen, wobei der Kältemittelkreislauf (1) Folgendes umfasst:
- Eine Hauptschleife (A), die gemäß der Strömungsrichtung des Kältemittels nacheinander umfasst:
- Eine Verdichtungsvorrichtung (2),
- Einen ersten Wärmetauscher (3), der dazu konfiguriert ist, Wärme mit einem ersten Wärmeträgerfluid (F1) auszutauschen,
- Eine erste Entspannungsvorrichtung (4),
- Einen ersten Verdampfer (5), der dazu konfiguriert ist, Wärme mit einem Element (30) eines Antriebsstrangs eines Kraftfahrzeugs über ein zweites Wärmeträgerfluid (F2) auszutauschen,
- Einen ersten Abzweigungsast (B), der einen ersten Anschlusspunkt (11), der auf der Hauptschleife (A) stromabwärts des ersten Wärmetauschers (3) und stromaufwärts der ersten Entspannungsvorrichtung (4) angeordnet ist, mit einem zweiten Anschlusspunkt (12) verbindet, der auf der Hauptschleife (A) stromabwärts des ersten Verdampfers (5) und stromaufwärts der Verdichtungsvorrichtung (2) angeordnet ist, wobei der erste Abzweigungsast (B) eine zweite Entspannungsvorrichtung (6) und einen zweiten Wärmetauscher (7) umfasst, der dazu konfiguriert ist, Wärme mit einem Innenluftström (Fi) eines Fahrgastraums des Kraftfahrzeugs auszutauschen, wobei das Thermokonditionierungssystem dazu konfiguriert ist, in einem sogenannten Antriebsstrang-Kühlbetriebsmodus zu betreiben, in dem das erste Wärmeträgerfluid (F1) Wärme vom Kältemittel aufnimmt und das zweite Wärmeträgerfluid (F2) Wärme an das Kältemittel abgibt, und in dem ein Kältemitteldurchsatz durch den zweiten Wärmetauscher (7) null ist, wobei das Verfahren - **dadurch gekennzeichnet ist, dass** es - die folgenden Schritte umfasst:
- a) Bestimmen einer Temperatur (Tint) des Innenluftstroms (Fi),
- b) Bestimmen eines Sättigungsdampfdrucks (Ps) des Kältemittels, der der Temperatur (Tint) des Innenluftstroms (Fi) entspricht,
- i) Bestimmen eines Drucks (P1) des Kältemittels am Ausgang des ersten Verdampfers (5),
- ii) Steuern, in Abhängigkeit vom bestimmten Druck (P1), mindestens eines Parameters aus den folgenden Parametern: Durchströmungsquerschnitt (S4) der ersten Entspannungsvorrichtung (4), Durchströmungsquerschnitt (S5) der zweiten Entspannungsvorrichtung (6), Durchsatz (Q) des von der Verdichtungsvorrichtung (2) gelieferten Kältemittels, Temperatur (T1) oder Innenluftström (Fi), damit der Druck (P1) des Kältemittels am Ausgang des ersten Verdampfers (5) unter dem bestimmten Wert des Sättigungsdampfdrucks (Ps) liegt.

2. Verfahren nach Anspruch 1, umfassend die Schritte:
- d1) Reduzieren des Durchströmungsquerschnitts (S4) der ersten Entspannungsvorrichtung (4) bis auf einen Mindestwert (Smin).
- e1) Vergrößern des Durchströmungsquerschnitts (S6) der zweiten Entspannungsvorrichtung (6), damit ein Kältemitteldurchsatz den zweiten Wärmetauscher (7) durchströmt.

3. Verfahren nach einem der vorhergehenden Ansprüche, bei dem Schritt ii) kontinuierlich wiederholt wird, wenn das Thermokonditionierungssystem (100) in Betrieb ist.

4. Verfahren nach einem der Ansprüche 1 oder 2, bei dem der Kältemittelkreislauf (1) ein Rückschlagventil (21) umfasst, das auf dem ersten Abzweigungsast (B) stromabwärts des zweiten Wärmetauschers (7) und stromaufwärts des zweiten Anschlusspunkts (12) angeordnet ist, wobei das Rückschlagventil (21) dazu konfiguriert ist, eine Kältemittelströmung vom zweiten Anschlusspunkt (12) zu einem Ausgang (B) des zweiten Wärmetauschers (7) zu blockieren.

5. Verfahren nach einem der Ansprüche 1 oder 2 - umfassend den Schritt:
- i) Erkennen einer Kältemittelansammlung im zweiten Wärmetauscher (7), und bei dem Schritt ii) nur dann durchgeführt wird, wenn in Schritt i) eine Kältemittelansammlung im zweiten Wärmetauscher (7) erkannt wird.

6. Verfahren nach Anspruch 5, bei dem das Thermokonditionierungssystem eine Kältemittelakkumulationsvorrichtung (10') umfasst, die auf der Hauptschleife (A) stromabwärts des ersten Wärmetauschers (3) und stromaufwärts des ersten Anschlusspunkts (11) angeordnet ist, und bei dem der Schritt zur Erkennung einer Kältemittelansammlung im zweiten Wärmetauscher (7) die folgenden Teilschritte umfasst:
- Bestimmen eines Überhitzungswerts (sh) des Kältemittels am Ausgang des ersten Verdampfers (5),
- Wenn die bestimmte Überhitzung (sh) größer als ein dritter vorbestimmter Schwellenwert (Th3) ist, Erkennen einer Kältemittelansammlung im zweiten Wärmetauscher (7).

7. Verfahren nach Anspruch 5, bei dem das Thermokonditionierungssystem eine Kältemittelakkumulationsvorrichtung (10) umfasst, die auf der Hauptschleife (A) stromabwärts des zweiten Anschlusspunkts (12) und stromaufwärts der Verdichtungsvorrichtung (2) angeordnet ist, und bei dem der Schritt zur Erkennung einer Kältemittelansammlung im zweiten Wärmetauscher (7) die folgenden Teilschritte umfasst:
- Bestimmen eines Unterkühlungswerts (sc) des Kältemittels am Eingang der ersten Entspannungsvorrichtung (4),
- Wenn die bestimmte Unterkühlung (sc) unter einem vierten vorbestimmten Schwellenwert (Th4) liegt, Erkennen einer Kältemittelansammlung im zweiten Wärmetauscher (7).

8. Verfahren nach einem der vorhergehenden Ansprüche, umfassend die Schritte:
- Erwärmen des Innenluftstroms (Fi), damit der Druck (P1) des Kältemittels am Ausgang des ersten Verdampfers (5) unter einem vorbestimmten Schwellenwert (Pmax) liegt.

9. Verfahren nach dem vorhergehenden Anspruch, bei dem das Thermokonditionierungssystem (100) eine elektrische Heizvorrichtung (20) umfasst, und bei dem die Erwärmung des Innenluftstroms (Fi) durch die Aktivierung einer elektrischen Heizvorrichtung (20) erfolgt.

10. Verfahren nach Anspruch 8 oder 9, umfassend die Schritte:
- Betreiben des Thermokonditionierungssystems in einem sogenannten Energierückgewinnungsmodus, in dem das erste Wärmeträgerfluid (F1) Wärme vom Kältemittel aufnimmt und das zweite Wärmeträgerfluid (F2) Wärme an das Kältemittel abgibt, um den Innenluftstrom (Fi) zu erwärmen,
- Steuern des Durchsatzes des Innenluftstroms (Fi) auf einen Wert unterhalb eines vorbestimmten Schwellenwerts.

11. Verfahren nach dem vorhergehenden Anspruch, bei dem das Thermokonditionierungssystem eine bewegliche Klappe (26) umfasst, die dazu konfiguriert ist, eine Umluftrate des Innenluftstroms (Fi) einzustellen, wobei das Verfahren den Schritt umfasst:
- Steuern der Position der beweglichen Klappe (26), damit die Umluftrate des Innenluftstroms (Fi) über einem vorbestimmten Schwellenwert (Fmax) liegt.

12. Verfahren nach dem vorhergehenden Anspruch, umfassend den Schritt:
- Erkennen der Anwesenheit mindestens eines Insassen im Fahrgastraum des Fahrzeugs,
- Wenn die Anwesenheit mindestens eines Insassen erkannt wird, Zuweisen eines ersten Werts (Fmax1) zum vorbestimmten Schwellenwert (Fmax) der Umluftrate des Innenluftstroms (Fi),
- Andernfalls Zuweisen eines zweiten Werts (Fmax2) zum vorbestimmten Schwellenwert (Fmax) der Umluftrate des Innenluftstroms (Fi), wobei der zweite Wert (Fmax2) größer als der erste Wert (Fmax1) ist.

## Claims

1. Method for controlling a thermal conditioning system (100), the thermal conditioning system (100) comprising a refrigerant fluid circuit (1) configured to circulate a refrigerant fluid, the refrigerant fluid circuit (1) comprising:
- A main loop (A) comprising successively in the direction of circulation of the refrigerant fluid:
- A compression device (2),
- A first heat exchanger (3) configured to exchange heat with a first heat transfer fluid (F1),
- A first expansion device (4),
- A first evaporator (5) configured to exchange heat with an element (30) of a drivetrain of a motor vehicle via a second heat transfer fluid (F2),
- A first bypass branch (B) connecting a first connection point (11) arranged on the main loop (A) downstream of the first heat exchanger (3) and upstream of the first expansion device (4) to a second connection point (12) arranged on the main loop (A) downstream of the first evaporator (5) and upstream of the compression device (2), the first bypass branch (B) comprising a second expansion device (6) and a second heat exchanger (7) configured to exchange heat with an interior air flow (Fi) to a passenger compartment of the motor vehicle, the thermal conditioning system being configured to operate according to an operating mode referred to as drivetrain cooling mode in which the first heat transfer fluid (F1) receives heat from the refrigerant fluid and the second heat transfer fluid (F2) transfers heat to the refrigerant fluid, and in which a flow rate of refrigerant fluid through the second heat exchanger (7) is zero, the method - being **characterised in that** it comprises
- comprising the steps:
- a) determining a temperature (Tint) of the interior air flow (Fi),
- b) determining a saturated vapour pressure (Ps) of the refrigerant fluid corresponding to the temperature (Tint) of the interior air flow (Fi),
- i) determining a pressure (P1) of the refrigerant fluid at the outlet of the first evaporator (5),
- ii) controlling, as a function of the determined pressure (P1), at least one parameter among the following parameters: passage cross-section (S4) of the first expansion device (4), passage cross-section (S5) of the second expansion device (6), flow rate (Q) of refrigerant fluid supplied by the compression device (2), temperature (T1) or interior air flow (Fi), so that the pressure (P1) of the refrigerant fluid at the outlet of the first evaporator (5) is lower than the determined value of the saturated vapour pressure (Ps).

2. Method according to Claim 1, comprising the steps:
- d1) reducing the passage cross-section (S4) of the first expansion device (4) to a minimum value (Smin).
- e1) increasing the passage cross-section (S6) of the second expansion device (6) so that a flow rate of refrigerant fluid passes through the second heat exchanger (7).

3. Method according to one of the preceding claims, wherein step ii) is repeated continuously when the thermal conditioning system (100) is in operation.

4. Method according to one of Claims 1 or 2 wherein the refrigerant fluid circuit (1) comprises a non-return valve (21) arranged on the first bypass branch (B) downstream of the second heat exchanger (7) and upstream of the second connection point (12), the non-return valve (21) being configured to block a circulation of the refrigerant fluid from the second connection point (12) towards an outlet (B) of the second heat exchanger (7).

5. Method according to one of Claims 1 or 2 - comprising the step:
- i) detecting an accumulation of refrigerant fluid in the second heat exchanger (7), and wherein step ii) is implemented only if an accumulation of refrigerant fluid in the second heat exchanger (7) is detected in step i).

6. Method according to Claim 5, wherein the thermal conditioning system comprises a refrigerant fluid accumulation device (10') arranged on the main loop (A) downstream of the first heat exchanger (3) and upstream of the first connection point (11), and wherein the step of detecting an accumulation of refrigerant fluid in the second heat exchanger (7) comprises the sub-steps:
- determining a superheat value (sh) of the refrigerant fluid at the outlet of the first evaporator (5),
- if the determined superheat (sh) is greater than a third predetermined threshold (Th3), detecting an accumulation of refrigerant fluid in the second heat exchanger (7).

7. Method according to Claim 5, wherein the thermal conditioning system comprises a refrigerant fluid accumulation device (10) arranged on the main loop (A) downstream of the second connection point (12) and upstream of the compression device (2), and wherein the step of detecting an accumulation of refrigerant fluid in the second heat exchanger (7) comprises the sub-steps:
- determining a subcooling value (sc) of the refrigerant fluid at the inlet of the first expansion device (4),
- if the determined subcooling (sc) is lower than a fourth predetermined threshold (Th4), detecting an accumulation of refrigerant fluid in the second heat exchanger (7).

8. Method according to one of the preceding claims, comprising the steps:
- Heating the interior air flow (Fi) so that the pressure (P1) of the refrigerant fluid at the outlet of the first evaporator (5) is lower than a predetermined threshold (Pmax).

9. Method according to the preceding claim, wherein the thermal conditioning system (100) comprises an electric heating device (20), and wherein the heating of the interior air flow (Fi) is carried out by the activation of an electric heating device (20).

10. Method according to Claim 8 or 9, comprising the steps:
- operating the thermal conditioning system according to a mode referred to as energy recovery mode in which the first heat transfer fluid (F1) receives heat from the refrigerant fluid and the second heat transfer fluid (F2) transfers heat to the refrigerant fluid, in order to heat the interior air flow (Fi),
- controlling the flow rate of the interior air flow (Fi) to a value lower than a predetermined threshold.

11. Method according to the preceding claim, wherein the thermal conditioning system comprises a movable flap (26) configured to adjust a recirculation rate of the interior air flow (Fi), wherein the method comprises the step:
- controlling the position of the movable flap (26) so that the recirculation rate of the interior air flow (Fi) is greater than a predetermined threshold (Fmax).

12. Method according to the preceding claim, comprising the step:
- detecting the presence of at least one occupant in the passenger compartment of the vehicle,
- if the presence of at least one occupant is detected, assigning a first value (Fmax1) to the predetermined threshold (Fmax) of the recirculation rate of the interior air flow (Fi),
- otherwise assigning a second value (Fmax2) to the predetermined threshold (Fmax) of the recirculation rate of the interior air flow (Fi), the second value (Fmax2) being greater than the first value (Fmax1).
